# EUROPÄISCHE PATENTANMELDUNG

(11) **EP 4 357 054 A1**
(43) Veröffentlichungstag der Anmeldung: **24.04.2024**
(21) Anmeldenummer: 23173809.7
(22) Anmeldetag: 17.05.2023
(51) Int. Cl.: B23B 27/14

(54) **SCHNEIDEINSATZ**

(30) Priorität: 18.10.2022 DE 102022127278
(71) Anmelder: ZCC Cutting Tools Europe GmbH, 40472 Düsseldorf (DE)
(72) Erfinder: Agustin-Paya, Jose, 45478 Mülheim an der Ruhr (DE); Ge, Hongbing, 45476 Mülheim an der Ruhr (DE)
(74) Vertreter: RGTH

(57) **Zusammenfassung**

Die Erfindung betrifft einen Schneideinsatz zur spanbildenden Bearbeitung eines Werkstückes, insbesondere zur Schruppbearbeitung, dessen mindestens einseitige Deckfläche die Spanfläche (10) und dessen umlaufenden Seitenflächen die Freiflächen (11) bilden, wobei die Spanfläche in einer sich parallel zur Schneidkante (12) erstreckenden Spanformnut (15) mindestens ein erhabenes längsrippenförmiges Spanformelement (16) mit einem Rippenkamm (161) aufweist, das in Richtung der Schneidkante in einer Draufsicht betrachtet keilförmig und mit einer abgerundeten Spitze versehen ausläuft. Zur Reduzierung der Schnittkräfte wird vorgeschlagen, dass beidseitig des längsrippenförmigen Spanformelementes Gleitrampen (17, 18) angeordnet sind, die im Längsquerschnitt betrachtet keilförmig auf der Spanfläche auslaufen und die eine obere Dachfläche (172, 182) besitzen, die in einer Querschnittsansicht betrachtet linear ausgebildet ist und die in einer Höhe unterhalb des Rippenkamms verläuft.

## Beschreibung

Die Erfindung betrifft einen Schneideinsatz zur spanbildenden Bearbeitung eines Werkstückes, insbesondere zur Schruppbearbeitung, dessen mindestens einseitige Deckfläche die Spanfläche und dessen umlaufenden Seitenflächen die Freiflächen bilden, wobei die Spanfläche in einer sich parallel zur Schneidkante erstreckenden Spanformnut mindestens ein erhabenes längsrippenförmiges Spanformelement mit einem Rippenkamm aufweist, das in Richtung der Schneidkante in einer Draufsicht betrachtet keilförmig und mit einer abgerundeten Spitze versehen ausläuft.

In der DE 28 10 824 A1 wird bei einem einseitig verwendbaren Schneideinsatz vorgeschlagen, im Zentrum der Oberseite eine Erhebung anzuordnen, die als Vieleck ausgebildet ist und der Grundform des Schneideinsatzes entspricht. Insbesondere können die Ecken der als Vieleck ausgebildeten Erhebung auf die Mitte der Schneiden im Übrigen jedoch ringförmig ausgebildet sein. Darüber hinaus sind auch solche Schneidelemente bekannt, bei denen der zentrale Spanbrecher als Spanformstufe ausgebildet ist, wobei sich die Spanformerhebung bis in den Schneideckenbereich erstreckt. Der Nachteil dieser Ausführungsform besteht darin, dass beim Schneiden ein erhöhter Druck entsteht, der zu einem frühzeitigen Schneideinsatzverschleiß führt. Ebenso ist die erreichbare Schneidqualität unbefriedigend. Es sind daher anstelle der weit hervorragenden Spanbrecherstufe im Eckenbereich Kugelsegmente oder ähnliches vor der Spanbrecherstufe angeordnet und zum Teil diese Formen bis hin zu Kegel- oder Pyramidenstümpfen variiert.

Um auch bei stark differierenden Vorschüben bzw. Schnitttiefen sowie Schnittgeschwindigkeiten ein ausgeglichenes gutes Spanbildungsverhalten zu gewährleisten ist in der EP 0 278 083 A1 vorgeschlagen worden, in dem sich auf der Spanfläche rechtwinklig zur Schneidkante an die Fase anschließenden Bereich ein Spanwinkel von mehr als 30° vorzusehen, wobei der Spanwinkel mit zunehmendem Abstand von der Fase kleiner wird und in den zwischen den Schneideckenbereichen liegenden Spanflächenbereichen des Schneidkörpers in Spanablaufrichtung verlaufende und mit Seitenabstand nebeneinander angeordnete Spanrippen aus der Spanfläche herausragend vorzusehen, zwischen denen weitere Erhebungen mit Auflauframpen dienen. Im Eckenbereich befinden sich drei nebeneinander angeordnete Graterhebungen, deren beiden äußeren mit ihren Gratlängsachsen parallel zu den ihnen benachbarten Spanrippen verlaufen.

Die EP 0 143 758 zeigt langgestreckte Rippen, die im Querschnitt trapezförmig sind und parallel zur Schneidkante verlaufen. Diese Rippen werden durch Mulden unterbrochen.

In der DE 41 36 417 wird bei einem vieleckigen Schneideinsatz vorgeschlagen, dass der erhabene Spanbrecher zu einem Schneidenbereich hin in Form von mindestens einer Längsrippe, vorzugsweise zwei Längsrippen ausläuft, die symmetrisch zu einer Schneideckenwinkelhalbierenden angeordnet sind und deren Längsachsen einen gemeinsamen Schnittpunkt im Bereich des Spanbrechers ausweisen.

In der EP 0 611 334 B1 wird bei einem vieleckigen Schneideinsatz der eingangs genannten Art vorgeschlagen, dass der Spanbrecher in Form mindestens einer keilförmigen im Spanablaufbereich angeordneten Längsrippe mit einer im Längsquerschnitt und im hierzu senkrechten Querschnitt kantenfreien konvexen Form ausläuft, wobei die Längsrippen - im zur Längsachse der Längsrippe senkrechten Querschnitt betrachtet - zur sie umgebenden Spanfläche oder Spanbrechernut hin unter einem größeren Radius als in ihrem oberen Bereich ausläuft und an ihrem der Schneidecke zugewandten Ende keilförmig ausgebildet ist und aus der Draufsicht betrachtet unter einem Keilwinkel ≤ 20° ausläuft.

Schließlich wird in der DE 44 22 312 A1 ein Schneideinsatz der eingangs genannten Art vorgeschlagen, bei dem das erhabene Spanformelement in Richtung seiner Längsachse im Bereich der der Schneidkante zugewandten Anstiegsfläche kontinuierlich zu schneidkantenferneren Bereichen eine zunehmende Breite aufweist, wobei die Anstiegsfläche aus im Wesentlichen ebenen Seitenflächen besteht, die sowohl zur Schneidkante hin als auch nach oben unter einen spitzen Winkel aufeinander zulaufen, wobei die obere Kante durchgängig abgerundet ist. Die der Schneidkante abgewandte Fläche ist eine an die Anstiegsfläche zumindest teilweise angrenzende Ebene, die als abfallende Flanke ausgebildet ist.

Es ist Aufgabe der vorliegenden Erfindung, einen Schneideinsatz zu schaffen, der aufgrund seiner Anordnung und Gestaltung der erhabenen Spanformelemente bei der Zerspanung reduzierte Schnittkräfte auslöst und den abgetrennten Span mit einer verringerten Reibung ablaufen lässt.

Diese Aufgabe wird durch einen Schneideinsatz nach Anspruch 1 gelöst. Die Erfindung besteht darin, dass beidseitig des längsrippenförmigen Spanformelementes Gleitrampen angeordnet sind, die im Längsquerschnitt betrachtet keilförmig auf der Spanfläche auslaufen und die eine obere Dachfläche besitzen, die in einer Querschnittsansicht linear ausgebildet ist und die in einer Höhe unterhalb des Rippenkamms verläuft.

Während die Längsrippe, welche die beidseitig vorhandenen Gleitrampen überragt, eine Spanverformung liefert, dienen die Gleitrampen als Stützfläche für den Span mit einer deutlich geringeren Reibungsfläche. Eine solche geometrische Ausgestaltung ist insbesondere für Schruppbearbeitungen, d.h. Bearbeitungen mit hohem Vorschub und großen Schnitttiefen insbesondere für die Zerspanung von spröden Stählen sowie duktilen Materialien, geeignet. Anwendbare Vorschübe liegen bei Schnitttiefen zwischen 1,5 mm und 9 mm (je nach Werkzeuggröße).

Es ist bekannt, dass der Spannbruch darauf beruht, dass der ablaufende Span in seinem Querschnitt bis zur Bruchdehnung deformiert wird. Der Spanbruch kann sowohl über den Spanquerschnitt als auch über die Anfangskrümmung beeinflusst werden, die dem Span durch das Spanformelement des Schneideinsatzes erteilt wird. Es ist weiterhin bekannt, dass sich der Spanbruch bei Erhöhung der Spandicke verbessert, jedoch wird die Spandicke im Wesentlichen durch den zu bearbeitenden Werkstoff und die sonstigen Bearbeitungsbedingungen vorgegeben. Der Schaffung eines möglichst kleinen Anfangskrümmungsradius zur Begünstigung des Spanbruches stehen im Allgemeinen die Nachteile der damit verbundenen Zerspankräfte und die damit verbundene zunehmende Belastung des Schneideinsatzes entgegen. Dazu kommen dynamische Kräfte, die bis zur unzulässigen Schwingungen im Zerspanungsprozess sowohl in der Frequenz als auch in der Amplitude führen können.

Umgekehrt kann der Anfangskrümmungsradius des Spans auch nicht beliebig groß gewählt werden, da dann der Span, um zu brechen, weiter aufgebogen werden muss. Durch die nach dem Stand der Technik bekannten Längsrippen werden in den Spanquerschnitt versteifende Sicken eingeformt, und zwar in der Nähe der Schneidkante, wo der Span sehr gut plastisch verformbar ist. Durch den Abstand der längsrippenförmigen Spanformelemente von der Schneidkante bzw. durch eine vorgesehene Fase wird gleichzeitig der Verschleißangriff an der Schneidkante minimal gehalten. Die erfindungsgemäße zusätzlich vorhandenen Gleitrampen, deren obere Dachfläche unterhalb des Rippenkamms der längsrippenförmigen Spanformelemente liegt, verringert die ansonsten entstehende höhere Reibung des Spans beim Spanablauf ohne die durch die Sickenbildung erzielte Spanführung zu beeinträchtigen. Ein seitliches Ausweichen des Spans wird wirkungsvoll verhindert.

Das längsrippenförmige Spanformelement sowie die Gleitrampen führen zu einem Aufbiegen des Spans bis hin zum Bruch durch einen Spanbrecher, der nach einer Weiterentwicklung der Erfindung durch ein mittleres erhabenes Spanflächenplateau oder durch eine stark ansteigende Kontur des Rippenkamms zu schneidkantenfernen Bereichen herbeigeführt wird.

Weiterentwicklungen der Erfindung sind in den Unteransprüchen beschrieben.

Vorzugsweise sind die Gleitrampen und die längsrippenförmigen Spanformelemente parallel zueinander angeordnet, wobei die Längsmittelachsen mit der Schneidkante einen Winkel von 80° ± 10° bilden. Die Gleitrampen sind vorzugsweise spiegelsymmetrisch zur Längsrippe bzw. dem Rippenkamm angeordnet, wobei der Abstand des Rippenkamms zu einer parallel verlaufenden Längsmittellinie der Dachfläche 0,4 mm bis 15 mm, vorzugsweise 0,5 mm beträgt.

Die von der Spanfläche, konkret der Spanformnut gemessene Höhe des längsrippenförmigen Spanformelementes ist an der höchsten Erhebung der längsrippenförmigen Spanformelementes 0,3 mm, wobei der Abstand der Dachfläche zur Spanfläche bzw. der Spanformnut 1/3 bis 2/3 der Höhe des längsrippenförmigen Spanformelementes ist. Die Breite der Dachfläche beträgt vorzugsweise 0,4 mm bis 2,5 mm. Der Abstand des längsrippenförmigen Spanformelementes von der Schneidecke beträgt mindestens 2,5 mm. Je nach Schneideinsatzgröße und Schnittbedingungen können an einer Schneidkante zwei der genannten Tripel, bestehend aus längsrippenförmigen Spanformelement und beidseitigen Gleitrampen vorgesehen sein.

Zur Stabilisierung der Schneidkante und auch zur Minimierung des Schneidkantenverschleißes ist auf der Spanfläche an die Schneidkante angrenzend eine Fase vorgesehen, woran sich eine Spanformmulde anschließt, innerhalb der das längsrippenförmige Spanformelement und die Gleitrampen angeordnet sind.

Nach einer weiteren Ausführungsform der Erfindung verjüngen sich die Gleitrampen zu schneidkantenferneren Bereichen, d.h. dass die "Dachflächen" schmaler werden.

Vorzugsweise ist der Rippenkamm in seiner Längsrichtung betrachtet konvex und/oder konkav ausgebildet, wobei jeweils ausschließlich konvexe oder ausschließlich konkave Formgestaltungen ebenso im Rahmen der vorliegenden Erfindung liegen wie eine Kombination eines zunächst konkaven Verlaufes des Rippenkamms zu schneidkantenferneren Bereichen und einer Änderung der Krümmung zu einer konvexen Form, wobei die konvexe Form des Rippenkamms zugleich als Spanbrecher dienen kann. Das längsrippenförmige Spanformelement ist in einem Querschnitt senkrecht zur Längsachse so ausgebildet, dass der Krümmungsradius im Bereich des Rippenkamms zwischen 0,25 mm bis 1 mm liegt und die abfallenden Seitenflanken, die ggf. gekrümmt ausgebildet sind, einen Winkel von 50° bis 100° bilden.

Vorzugsweise dient das mittlere Spanflächenplateau, das über die Schneidkanten und die Spanformelemente hinausragt, sowohl als Spanbrecher als auch bei beidseitig nutzbaren Schneideinsätzen als Auflagefläche im eingespannten Zustand.

Im Bereich einer Schneidecke wird hingegen von der beidseitigen Anordnung der Gleitrampen neben einem Spanformelement in Längsrippenform abgewichen. Zur Schneidecke hin ist das Spanflächenplateau mit einer abfallenden Flanke versehen, aus der symmetrisch zu der Schneideckenwinkelhalbierenden zwei längsrippenförmige Spanformelemente herausragen, neben der jeweils nur auf der der Schneideckenwinkelhalbierenden abgewandten Seite eine Gleitrampe angeordnet ist. Diese Ausbildung berücksichtigt, dass in der Schneidecke selbst, d.h. im Bereich der Schneideckenhalbierenden, kein Span abläuft.

Nach einer weiteren Ausgestaltung der Erfindung sind die Gleitrampen im Querschnitt, nämlich am Querschnitt senkrecht zur Längsachse im Wesentlichen trapezförmig ausgebildet, wobei die beiden Kanten von der Dachfläche zur abfallenden Flanke abgerundet sind und einen Radius von 0,25 mm bis max. 1 mm aufweisen.

Das längsrippenförmige Spanformelement läuft in einer Draufsicht betrachtet zur Schneidkante hin unter einem Keilwinkel zwischen 25° bis 40° aus.

Weitere Ausgestaltungen der Erfindung sind in den Figuren dargestellt. Es zeigen:
- Fig. 1: eine Seitenansicht eines Schneideinsatzes mit beidseitigen Spanflächenplateau,
- Fig. 2: eine Teilansicht eines Spanflächenabschnittes in einer Draufsicht auf die Spanfläche,
- Fig. 3: eine Querschnittsansicht mit einem konkaven Rippenkamm und einer konkaven Dachfläche einer Gleitrampe,
- Fig. 4: eine Querschnittsansicht eines Teilbereiches mit einer konvex ausgebildeten Dachfläche und einem konvexen Rippenkammverlauf,
- Fig. 5: eine Kombination aus einem konvexen und einem konkaven Verlauf der Dachfläche und des Rippenkamms,
- Fig. 6: eine Querschnittsansicht parallel zur Schneidkante und
- Fig. 7: eine Teilansicht der Spanfläche im Bereich einer Schneidecke.

Die vorliegende Erfindung kann grundsätzlich bei drei- oder viereckigen Schneideinsätzen realisiert werden, beispielsweise bei einem Schneideinsatz vom Typ CNMG120412, der zum Schruppen von Stählen wie z.B. 42CrMo4 bei den Schnittbedingungen (aₚ=4,0 mm und f=0,4 mm/U) bearbeitet wird. Im vorliegenden Fall besitzt der Schneideinsatz jeweils beidseitig eine Spanfläche 10, die zusammen mit umlaufenden Seitenflächen 11 Schneidkanten 12 bilden, wobei ein mittleres Spanflächenplateau 13a, 13b auf beiden Seiten einerseits als Spanbrecher und andererseits als Auflagefläche für den eingespannten Schneideinsatz dient.

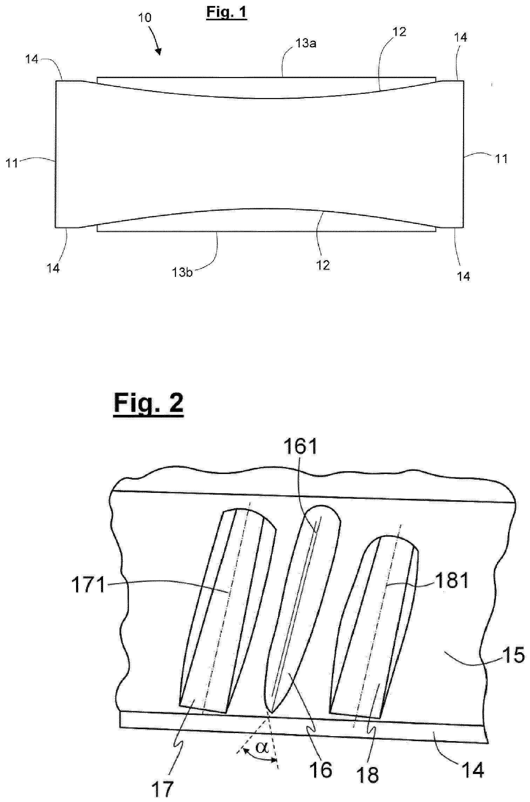

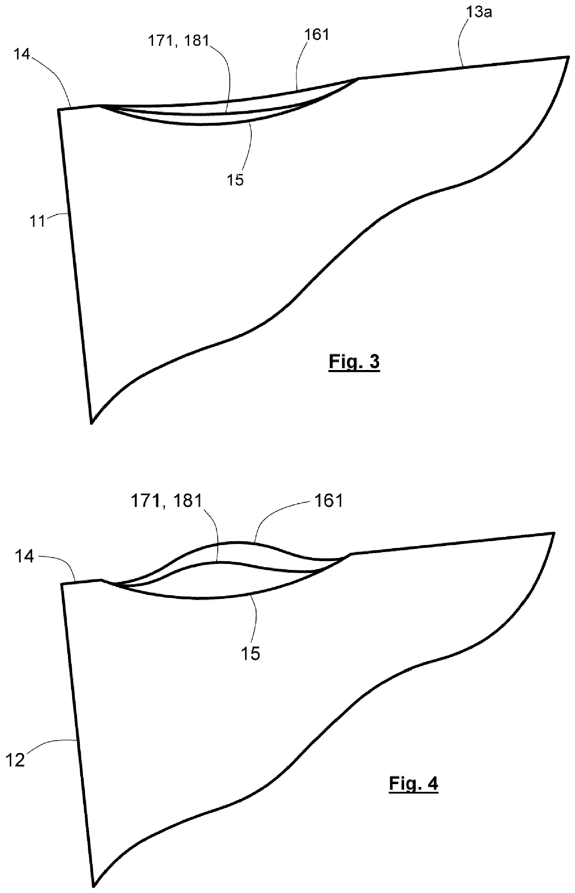

Wie aus Fig. 2 und Fig. 3 ersichtlich besitzt der Schneideinsatz eine Fase 14, der eine Spanformmulde 15 folgt, innerhalb der längsrippenförmige Spanformelemente 16 sowie Gleitrampen 17, 18 beidseitig angeordnet sind. Der Rippenkamm 161 und die jeweiligen Längsmittellinien 181, 182 laufen parallel und sind gegenüber einer Vertikalen zur Schneidkante um 20° gekippt.

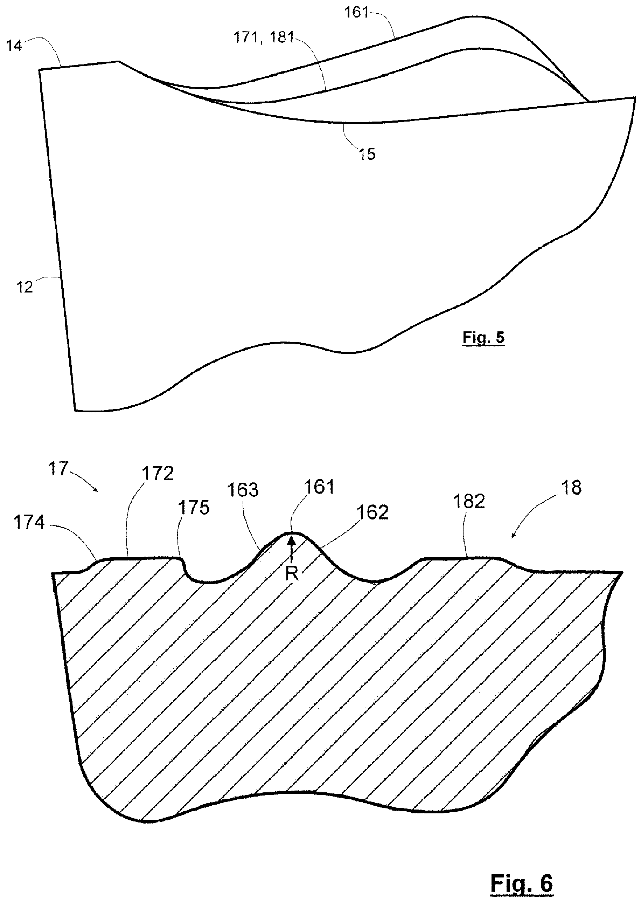

Die jeweils gewählte Querschnittsform in einer Ansicht parallel zur Schneidkante ist in Fig. 6 dargestellt, woraus hervorgeht, dass die Gleitrampen 17, 18 jeweils im Querschnitt linear ausgebildete Dachflächen 182, 172 haben, wohingegen das längsrippenartige Spanformelement 16 einen Rippenkamm 161 besitzt, der unter einem Radius R gekrümmt ist. Die beiden Flanken 162, 163 sind unter einem deutlich größeren Radius gewölbt oder eben ausgebildet, wobei die Flanken einen Winkel zwischen 50° und 100° einschließen. Die Gleitrampen sind an ihren Kanten 174, 175, welche die Dachfläche beidseitig begrenzen abgerundet, wobei der Eckenradius zwischen 0,25 mm und max. 1 mm liegt. Die beiden Kanten 174, 175 einer jeden Gleitrampe können auch zu schneidkantenferneren Bereichen konvergierend ausgebildet sein, d.h. zu einer sich verjüngenden Form der Dachfläche.

Figuren 3 bis 5 zeigen unterschiedliche Verläufe des Rippenkamms und der Dachflächen, wobei einheitlich der Rippenkamm 161 in der Querschnittsansicht "oberhalb" der Gleitrampenfläche, die durch die Längsmittellinien 171, 181 bestimmt sind, liegt. An die Fase schließt sich jeweils die Spanformmulde an, wobei das Spanformelement 16 mit seinem Rippenkamm 161 zunächst einen wachsenden Abstand zur Dachfläche aufweist, der sich am schneidkantenfernen Ende der Gleitrampen bzw. des längsrippenförmigen Spanformelementes wieder verringert.

Rippenkamm und Gleitflächen können entweder konvex (Fig. 3), konkav (Fig. 4) oder in einer Abfolge konvex und konkav (Fig. 5) ausgebildet sein.

Die letztgenannte Ausführungsform, die aus Fig. 5 ersichtlich ist, wird bei sog. einseitigen Schneideinsätzen gewählt, die nur eine Spanfläche und eine einzige Auflagefläche, welche eben ist, besitzen. Das "konvexe Querschnittsende" der Gleitflächen sowie der längsrippenförmigen Spanformelemente dienen als Spanbrecher, wenn kein mittleres Spanflächenplateau 13a, 13b gewählt wird.

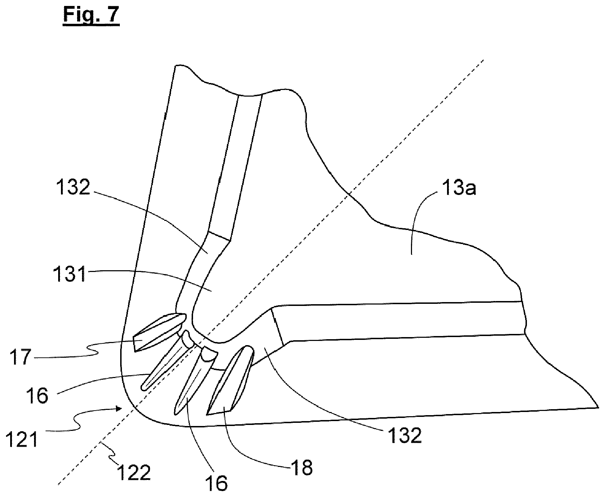

Fig. 7 zeigt eine Schneidecke 121 mit einer Schneideckenwinkelhalbierenden 122, zu der beidseitig ein längsrippenförmiges Spanformelement 16 und eine Gleitrampe 17 bzw. 18 abgeordnet sind. Das Spanflächenplateau 13a besitzt eine zur Ecke 121 gerichtete Zunge 131 sowie abfallende Flanken 132, aus denen die längsrippenförmigen Spanformelemente 16 bzw. die Gleitrampen 17, 18 herausragen. An der Kante von dem Spanflächenplateau 13a zu den Flanken 132 wird der ablaufende Span gebrochen. Diese Kante liegt wie das Spanflächenplateau 13a jeweils oberhalb der Spanformelemente und der Gleitrampen. Die Breite der Dachfläche, die der Länge der Linien 172, 182 entspricht, liegt zwischen 0,4 mm und 2,5 mm. Die am jeweiligen Fußpunkt eines längsrippenförmigen Spanelementes gemessene max. Breite erstreckt sich im Bereich 0,5 mm bis 1,5 mm.

## Patentansprüche

1. Schneideinsatz zur spanbildenden Bearbeitung eines Werkstückes, insbesondere zur Schruppbearbeitung, dessen mindestens einseitige Deckfläche die Spanfläche (10) und dessen umlaufenden Seitenflächen die Freiflächen (11) bilden, wobei die Spanfläche (10) in einer sich parallel zur Schneidkante (12) erstreckenden Spanformnut (15) mindestens ein erhabenes längsrippenförmiges Spanformelement (16) mit einem Rippenkamm (161) aufweist, das in Richtung der Schneidkante (12) in einer Draufsicht betrachtet keilförmig und mit einer abgerundeten Spitze versehen ausläuft,
**dadurch gekennzeichnet, dass**
beidseitig des längsrippenförmigen Spanformelementes (16) Gleitrampen (17, 18) angeordnet sind, die im Längsquerschnitt betrachtet keilförmig auf der Spanfläche (10) auslaufen und die eine obere Dachfläche besitzen, die in einer Querschnittsansicht betrachtet linear (172, 182) ausgebildet ist und die in einer Höhe unterhalb des Rippenkamms (161) verläuft.

2. Schneideinsatz nach Anspruch 1, **dadurch gekennzeichnet, dass** der Abstand des Rippenkamms (161) zu einer parallel verlaufenden Längsmittellinie der Dachfläche 0,4 mm bis 15 mm, vorzugsweise 0,5 mm beträgt.

3. Schneideinsatz nach Anspruch 1 oder 2, **dadurch gekennzeichnet, dass** die von der Spanfläche (10) aus gemessene Höhe des längsrippenförmigen Spanformelementes (16) mindestens 0,3 mm und der Abstand der Dachfläche zur Spanfläche (10) 1/3 bis 2/3 wie die genannte Höhe ist und/oder dass die Breite der Dachfläche 0,4 mm bis 2,5 mm beträgt.

4. Schneideinsatz nach einem der Ansprüche 1 bis 3, **dadurch gekennzeichnet, dass** der Abstand des längsrippenförmigen Spanformelementes (16) von einer Schneidecke (121) mindestens 2,5 mm beträgt.

5. Schneideinsatz nach einem der Ansprüche 1 bis 4, **dadurch gekennzeichnet, dass** auf der Spanfläche (10) an die Schneidkante eine Fase (14) angrenzt und/oder eine Spanformmulde (15) angeordnet ist, innerhalb der das längsrippenförmige Spanformelement (16) und die Gleitrampen (17, 18) angeordnet sind.

6. Schneideinsatz nach einem der Ansprüche 1 bis 5, **dadurch gekennzeichnet, dass** die Gleitrampen (17, 18) sich zu schneidkantenferneren Bereichen verjüngen.

7. Schneideinsatz nach einem der Ansprüche 1 bis 6, **dadurch gekennzeichnet, dass** der Rippenkamm (161) in seiner Längsrichtung konvex und/oder konkav ausgebildet ist und in seinem hierzu senkrechten Querschnitt einen Krümmungsradius (R) von 0,25 mm bis 1 mm sowie abfallende Seitenflanken (162, 163) aufweist, die einen Winkel von 50° bis 100° bilden.

8. Schneideinsatz nach einem der Ansprüche 1 bis 7, **gekennzeichnet durch** ein mittleres Spanflächenplateau, das über die Schneidkanten und die Spanformelemente hinausragt und das als Spanbrecher dient und bei beidseitig nutzbaren Schneideinsätzen als Auflagefläche nutzbar ist.

9. Schneideinsatz nach einem der Ansprüche 1 bis 8, **dadurch gekennzeichnet, dass** das Spanflächenplateau (13a, 13b) zur Schneidecke hin in einer Draufsicht auf die Spanfläche (10) betrachtet eine abfallende Flanke (132) besitzt, aus der symmetrisch zu der Schneideckenwinkelhalbierenden zwei längsrippenförmige Spanformelemente (16) herausragen, neben der jeweils nur auf der der Schneideckenwinkelhalbierenden abgewandten Seite eine Gleitrampe (17, 18) angeordnet ist.

10. Schneideinsatz nach einem der Ansprüche 1 bis 9, **dadurch gekennzeichnet, dass** die Gleitrampen (17, 18) im Querschnitt, nämlich einem Querschnitt senkrecht zur Längsachse, trapezförmig ausgebildet sind und/oder dass die längsrippenförmigen Spanformelemente (16) in einer Draufsicht betrachtet unter einem Keilwinkel (α) zwischen 25° bis 40° auslaufen.
